Europäisches Patentamt

European Patent Office

Office européen des brevets

(19)

(11) Publication number: **0 217 066**
**A2**

(12) # EUROPEAN PATENT APPLICATION

(21) Application number: 86110777.9

(22) Date of filing: 04.08.86

(51) Int. Cl.4: **G02B 6/44** , **H01B 7/28**

(30) Priority: 30.08.85 IT 2202285

(43) Date of publication of application:
**08.04.87 Bulletin 87/15**

(84) Designated Contracting States:
**DE FR GB NL SE**

(71) Applicant: **SOCIETA' CAVI PIRELLI S.p.A.**
**Piazzale Cadorna 5**
**I-20123 Milano(IT)**

(72) Inventor: **Anelli, Pietro**
**Via L. della Pila, 61**
**Milan(IT)**
Inventor: **Colombo, Gianfranco**
**Via Flume, 37**
**Sesto San Giovanni Milan(IT)**

(74) Representative: **Marlani, Giorgio, Dr. et al**
**INDUSTRIE PIRELLI S.p.A. Direzione Brevetti**
**Piazzale Cadorna, 5**
**I-20123 Milano(IT)**

(54) Optical fiber telecommunication cable.

(57) An optical fiber telecommunication cable according to the invention, in order to protect the optical fibers from hydrogen, comprises a mixture formed by molybdenum trioxide and a catalyst.

This mixture, whichever is the manner by which the same is embedded in the cable, chemically blocks on itself the hydrogen.

Fig. 1

EP 0 217 066 A2

The present invention refers to an optical fiber telecommunication cable and in particolar to an optical fiber telecommunication cable of the type in which the optical fibers are protected against the damages caused by the hydrogen.

It is known that when some gaseous hydrogen comes into contact with an optical fiber, the transmitted signals suffer an attenuation which is irreversible and compromises the transmission capacity of the cable.

The hydrogen may form within a cable by evolving from the component materials when these latter have absorbed it during their working processes.

Another reason for which the hydrogen may form within a cable is the consequence of chemical reactions that can occur among the component materials and water traces in liquid or gaseous state penetrated into the cable itself.

Moreover the hydrogen can reach the optical fibers of a cable through diffusion within this latter coming from the outside. In this case the amount of hydrogen that can reach the otptical fibers can be also greater if the cable is arranged in an ambient rich in hydrogen.

In the optical fiber cables the protection in respect of hydrogen must be also assured efficaciously for the entire time in which the cable must work that, as known, is of the order of tens of years.

In the known cables the protection of the optical fibers from hydrogen is obtained by the presence in them of a barrier formed by materials that physically absorb the hydrogen, as for instance the carbon fibers, the palladium in the form of threads, the glass charged with phosphorus and the like.

Examples of known cables are described in the British patent application No. 2,144,559.

Considering that the amount of hydrogen that can be physically absorbed per unit of volume by the more active materials used in the known cables is rather limited, it is necessary that in the cable inside there are great amounts of these materials in order to assure the protection of the optical fiber for the entire lifetime of a cable and this leads to unaccepted increases in the diametral dimensions of the cables themselves.

The aim of the present invention is that of realizing optical fiber cables in which these latter be efficaciously protected from hydrogen for any working lifetime without increasing the diametral dimensions of the cable for obtaining said result.

The object of the present invention is an optical fiber telecommunication cable comprising a sheath enclosing at least an optical fiber, characterized by the fact of embedding a mixture comprising molybdenum trioxide and a catalyst selected from the transition metals, the inorganic and organic compounds of the transition metals, the organometallic acids of said transition metals both in se and supported on inert materials.

The present invention will be better understood by the following detailed description made by way of non-limiting example with reference to the figures of the attached sheet of drawing in which:

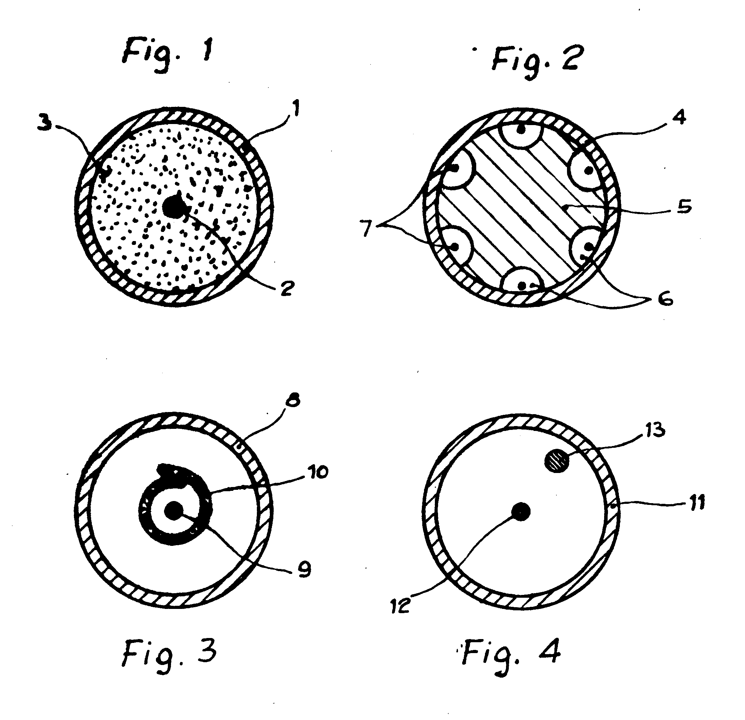

-figure 1 is a cross section of an optical fiber cable according to the invention;

-figures from 2 to 4 show in cross section alternative embodiments of optical fiber cables according to the invention.

Generally optical fiber telecommunication cables have the following structure.

They are provided with a sheath enclosing a structure generally called optical core, embedding at least an optical fiber and said structure can assume several configuration.

Then the sheath can be provided therearound with protections, armours and other like elements whose presence depends on the type of ambient in which the optical fiber cable has to work.

The present invention includes both land and submarine optical fiber cables, having any configuration either for the optical core or for the elements outside the sheath, whose characteristic is that of embedding the mixture defined hereinafter able to chemically block on itself hydrogen independently of the manner by which said mixture is embedded in the cable.

The absorbing hydrogen mixture embedded in a cable according to the invention must have the following two essential components.

An essential component is the molibdenum trioxide.

The other essential component is a catalyst selected from the transition metals, the inorganic and organic compounds of the transition metals, the organometallic acids of the transition materials, both in se and supported on inert materials.

Examples of catalysts can be the powdered platinum, the powdered palladium, the powdered nickel, the organic or inorganic compounds of said metals, as the palladium acetate, the palladium acetyl-acetonate, the palladium hydroxide, the palladium chloride and the chloroplatinic acid both used along the supported on inert materials as for instance the bone or vegetable coal known to the skilled in the art as "charcoal".

As previously said, the optical fiber cables falling within the present invention are not subjected to any limitation for the manner by which the above defined mixture is embedded in the cable.

For instance the mixture can be embedded as it is or constitute the additive of a filling material of the cable or of a compound of polymeric material forming one component of the cable enclosed in the sheath, this latter, if constituted by a compound of plastic material, being included.

The figures represent only by way of examples some cables according to the invention.

The cable represented in figure 1 has a sheath 1 of metallic material or of a plastic material compound.

The sheath 1 encloses an optical fiber 2 and the space comprised between them is filled with a mixture 3 according to the invention or by a filling material for instance a petroleum jelly, a silicone grease and the like in which a mixture according to the invention is dispersed.

According to a not shown alternative embodiment of the cable of figure 1 the mixture 3 covers only the inner surface of the sheath 1 and is bound to this latter through an adhesive, as for instance a polyvinyl-ether.

According to a further not shown alternative embodiment of the cable of figure 1 the sheath surrounding the optical fibers is of a polymeric material compound and the mixture is embedded in the sheath constituting a component of the compound forming this latter.

Figure 2 represents another embodiment of a cable according to the invention.

As shown in figure 2 the cable have a sheath 4 of metallic material or of a polymeric material compound.

The sheath 4 encloses a shaped profile 5, for instance of polymeric material compound, provided on its outer surface with a plurality of grooves 6 having the configuration of a closed or open helix where the optical fibers 7 are loosely housed.

The sheath 4 closes the grooves 6 and these latter are filled with a filling material, for instance a petroleum jelly or a silicone grease in which the said previously defined mixture is dispersed.

Alternatively, in the cable of figure 2 the above given mixture fills alone the grooves 6.

According to another alternative embodiment, the mixture covers the surface of the grooves 6 being bound to these latter through an adhesive, for instance polyvinyl-ether.

A further alternative embodiment provides for having the mixture embedded in the polymeric material compound forming the shaped profile 5 or, if the sheath 4 is a plastic sheath, in the compound forming said sheath or in both the compounds.

Other alternative embodiments of the cable of figure 2 are constituted by any whatsoever of the possible combinations among the different alternative embodiments given above.

Figure 3 represents a further alternative embodiment of a cable according to the invention.

Said cable has a sheath 8 of metallic material or of a polymeric material compound.

The sheath 8 encloses an optical fiber 9. This latter is surrounded by a wrapping 10 formed by a tape embedding the previously defined mixture.

The tape forming the wrapping 10 can be of a metallic, or plastic, or textile material or paper and the manner by which said tape embeddes the mixture can be any one. For instance the tape is covered on at least one of its faces by the above defined mixture that is bound to the tape through an adhesive, for instance polyvinyl-ether.

In alternative, the mixture is embedded in a film of plastic material, for instance polyethylene, doubled with the tape.

If the tape is of plastic material, the absorbing hydrogen mixture can be embedded in the tape itself constituting a component of the compound of polymeric material forming the tape.

In the case in which the tape forming the wrapping 10 is a textile material, as a fabric tape of a non-woven fabric tape, or paper, the mixture impregnates the tape resulting enclosed in the meshes of the network of threads or of fibres forming the tape itself.

A further alternative embodiment of a cable according to the invention is represented in figure 4.

The cable shown in figure 4 has a sheath 11 of metallic or plastic material that encloses an optical fiber 12 and an elongated element, for instance a rod 13 of plastic material embedding the above given mixture as a component of the compound forming said rod.

The rod 13 flanks the optical fiber 12 and the space enclosed within the sheath 11 can be in case, but not necessarily, occupied by filling material of type known per se.

According to a not shown alternative embodiment the rod 13 is sostituted with a tube of a polymer having a high permeability to hydrogen as the low density polyethylene and the silicone rubber, filled with the mixture in question.

Experimental tests have been carried out on the previously defined mixture, able to chemically block on itself the hydrogen, and on the components of cables according to the invention where said mixture is embedded to determine the hydrogen absorption capacity.

The experimental tests have been carried out as follows.

The equipment used comprises a glass bulb of 175 cm³, from which a glass tube that terminates with a two-way cock tightly projects. One of the cock two-ways is connected to a vacuum pump, while the other is connected to a phial containing hydrogen..

At an intermediate position of the tube there is inserted a mercury gauge.

Samples of cable components according to the invention (that will be specified later on) have been introduced into the glass bulb.

Subsequently the barometric vacuum has been effected within the glass bulb controlling the reaching of the same through the mercury gauge.

At this point the vacuum pump has been excluded and the glass bulb has been put into communication with the phial containing the hydrogen so that this latter can flow into the glass bulb.

The tests have been carried out at a temperature of 20°C providing to introduce into the glass bulb an amount of hydrogen greater than that theoretically necessary for chemically saturating the

```
- molibdenum trioxide                          100 parts by weight
- palladium supported on charcoal
  with a content of palladium of 5%      1 part     "     "
```

To effect the test the powder of the sample has been placed into a glass basket introduced in the glass bulb.

```
- petroleum jelly                              100 parts by weight
- molibdenum trioxide                          10   "     "     "
- palladium supported on charcoal
  with a content of palladium of 5%      1 part  "     "
```

The content of the mixture able to chemically react with the hydrogen in this sample is of 1.5 grams.

To effect the test the walls of the glass bulb were covered with the filling material in question.

Sample C

This sample is constituted by a rectangular small plate of plastic material, in particular of polyethylene, having sides of 20 mm and of 100 mm and a thickness of 1 mm. The surfaces of the small

mixture present in the sample under examination and measured on the basis of the pressure of the latter within the glass bulb itself. Then it has been recorded in function of time the reduction of the hydrogen pressure within the glass bulb and it has been determined the corresponding amounts of hydrogen reacted for saturating 1 gram of the single samples and the time required to reach this result.

Then it has been calculated the amount given in normal cm³ per gram of mixture present in the single samples, of hydrogen chemically absorbed at sample saturation.

The experimental tests have been carried out on the samples indicated hereinafter.

Sample A

This sample is constituted by 15 grams of powder of hydrogen absorbing mixture having the following composition:

Sample B

This sample is constituted by 15 grams of a filling material having the following composition:

plate are covered with an adhesive film constituted by polyvinyl ether that blocks on the surface of the plate 2 grams of mixture having a composition equal to that of the sample A.

Sample D

This sample is constituted by a moulded rectangular small plate with sides of 35 mm and of 200 mm and a thickness of 1 mm, of the compound of plastic material having the following receipe:

- polybutadiene 1.4 - cis      100   parts by weight
- paraffinic plasticizer oil      10   "   "   "
- molibdenum trioxide      50   "   "   "
- palladium acetate      0.5   "   "   "

The small plate introduced in the glass bulb contains 2.5 grams of mixture able to react with the hydrogen.

Sample E

This sample is a square segment of 200 mm of side of a weft and warp fabric of cotton threads impregnated with 3 grams of the following compound:

- natural rubber      100   parts by weight
- molibdenum trioxide      50   "   "   "
- palladium acetyl acetonate      0.5   "   "   "

The content of mixture able to react with hydrogen of this sample is of 1.5 grams.

Sample F

This sample is constituted by a square section having the side of 200 mm of a cellulose paper embedding 0.5 gram of the following mixture:

- molibdenum trioxide      100 parts by weight
- palladium supported on charcoal with a content of 5% of palladium      1 part   "   "

tion of sample A.

Sample G

This sample is a low density polyethylene tube, sealed at the ends having a thickness wall of 0.2 mm, a diameter of 2 mm and a length of 1 m entirely filled with the mixture having the composi-

The content of mixture in the sample is of 9 grams.

The experimental results obtained with the above described samples are given in the following table.

| Samples | Column 1 | Column 2 | Column 3 |
|---------|----------|----------|----------|
| | hydrogen amount saturating the sample given in normal $cm^3$ per 1 gram of sample | time given in hours required to saturate a sample | hydrogen amount absorbed at saturation by the samples given in normal $cm^3$ per 1 gram of mixture present in them |
| A | 77 | 1.5 | 77 |
| B | 7 | 24 | 75 |
| C | 34 | 5 | 76 |
| D | 25 | 2880 | 72 |
| E | 11 | 100 | 75 |
| F | 8.5 | 24 | 76 |
| G | 68 | 2.5 | 77 |

The experimetal results given in the column 3 of the table show that all the samples are able to absorb and to chemically block hydrogen in an amount practically equal to the saturation thereoretical one for the mixture that is of about 77 normal $cm^3$ per gram of mixture.

This means that the mixture carries out its protective action independently of the manner in which it is present in the cable.

In fact said manner involves only the time required for reaching the saturation as shown by the values given in the column 2, but said experimentally determined times are to be considered negligible when compared with the lifetime required to an optical fiber cable.

Moreover, since the amount of hydrogen that can be formed in an optical fiber cable during its required lifetime are of the order of some normal $cm^3$ of hydrogen per meter of cable, it is evident from the experimental data that since in all the embodiments of cables according to the invention the amounts of hydrogen that can be chemically absorbed, is considerably greater than the amounts of hydrogen that can be foreseen, it can be obtained a sure protection for the optical fibers avoiding any necessity of increasing the diametral dimensions of the cables to achieve said result.

Although only some embodiments of cables according to the present invention have been illustrated and described, it is understood that the present invention includes in its scope any other alternative embodiment accessible to a technician of the field.

**Claims**

1) Optical fiber telecommunication cable comprising a sheath (1, 4, 8, 11) enclosing at least one optical fiber (2, 7, 9, 12), characterized by the fact of embedding a mixture comprising molibdenum trioxide and a catalyst selected from the transition metals, the inorganic and organic compounds of the transition metals, the organometallic acids of the said transition metals both in se and supported on inert materials.

2) Cable according to claim 1, characterized by the fact that the catalyst is selected from palladium acetate, palladium acetyl-acetonate, palladium hydroxide, palladium chloride and chloroplatinic acid.

3) Cable according to claim 1, characterized by the fact that the mixture fills any space existing between the sheath and the optical fibers.

4) Cable according to claim 1, characterized by the fact that the mixture is the additive of a filling material arranged inside the sheath enclosing the optical fibers.

5) Cable according to claim 1, characterized by the fact that the mixture covers the inner surface of the sheath (1, 4, 8, 11) being bound to this latter through an adhesive.

6) Cable according to claim 1 in which the sheath is of a polymeric material compound, characterized by the fact that the mixture is an additive of the compound forming said sheath (1, 4, 8, 11).

7) Cable according to claim 1 in which the sheath (4) surrounds a shaped profile (13) provided on its own outer surface with grooves (6) loosely housing the optical fibers (7), characterized by the fact that the mixture is present in the grooves of the shaped profile.

8) Cable according to claim 1 in which the sheath (4) surrounds a shaped profile (13) of a polymeric material compound provided on its own outer surface with grooves (6) loosely housing the optical fibers (7), characterized by the fact that the mixture is a component of the compound by which said shaped profile (13) is constituted.

9) Cable according to claim 1 in which the optical fibers (9) enclosed in the sheath (8) are surrounded by a tape (10) wrapping, characterized by the fact that the mixture is associated to the tape.

10) Cable according to claim 9, characterized by the fact that the mixture associated to the tape (10) covers at least a surface of the tape being bound to this latter through an adhesive.

11) Cable according to claim 9, characterized by the fact that the tape (10) is of a polymeric material compound embedding the mixture.

12) Cable according to claim 9, characterized by the fact that the tape (10) is a fibrous material tape impregnated with the mixture.

13) Cable according to claim 1, characterized by the fact that the mixture is embedded in an elongated element (13) flanking the optical fibers.

14) Cable according to claim 13, characterized by the fact that the elongated element (13) is a tube of polymeric material selected from low density polyethylene and silicone rubber filled with the mixture.

Fig. 1

Fig. 2

Fig. 3

Fig. 4

0 217 066